# EUROPEAN PATENT SPECIFICATION

(11) **EP 0 863 566 B1**
(45) Date of publication and mention of the grant of the patent: **24.09.2003**
(21) Application number: 98103734.4
(22) Date of filing: 03.03.1998
(51) Int. Cl.: H01P 1/205, H01P 1/213

(54) **Dielectric filter, dielectric duplexer and method of manufacturing the same**
Dielektrisches Filter, dielektrischer Duplexer und Verfahren zu deren Herstellung
Filtre diélectrique, duplexeur diélectrique et procédé de fabrication

(30) Priority: 05.03.1997 JP 5015297; 15.12.1997 JP 34474797
(43) Date of publication of application: 09.09.1998
(73) Proprietor: MURATA MANUFACTURING CO., LTD., Nagaokakyo-shi Kyoto-fu (JP)
(72) Inventor: Toda, Jun, Nagaokakyo-shi, Kyoto-fu (JP); Matsumoto, Haruo, Nagaokakyo-shi, Kyoto-fu (JP)
(74) Representative: Schoppe, Fritz, Dipl.-Ing.

(56) References cited:
- EP-A- 0 688 059
- EP-A- 0 731 522
- WO-A-93/24968

## Description

### 1. Field of the Invention

The present invention relates to a dielectric filter and a dielectric duplexer, each said filter and duplexer having a plurality of resonator holes, including at least one resonator hole having two longitudinal portions with different cross-sectional areas arranged in a dielectric block.

The invention also relates to a method of manufacturing the dielectric filter and the dielectric duplexer.

The invention further relates to a radio transceiver utilizing the above-described dielectric duplexer.

A dielectric filter is known in which a plurality of resonator holes are provided in a single dielectric block and a change in the cross-sectional area of each hole is provided by changing the inner diameter of the hole in order to achieve coupling between resonators. In the filter, a line impedance of the resonator corresponding to each resonator hole changes at the boundary where the difference in cross-sectional area is formed.

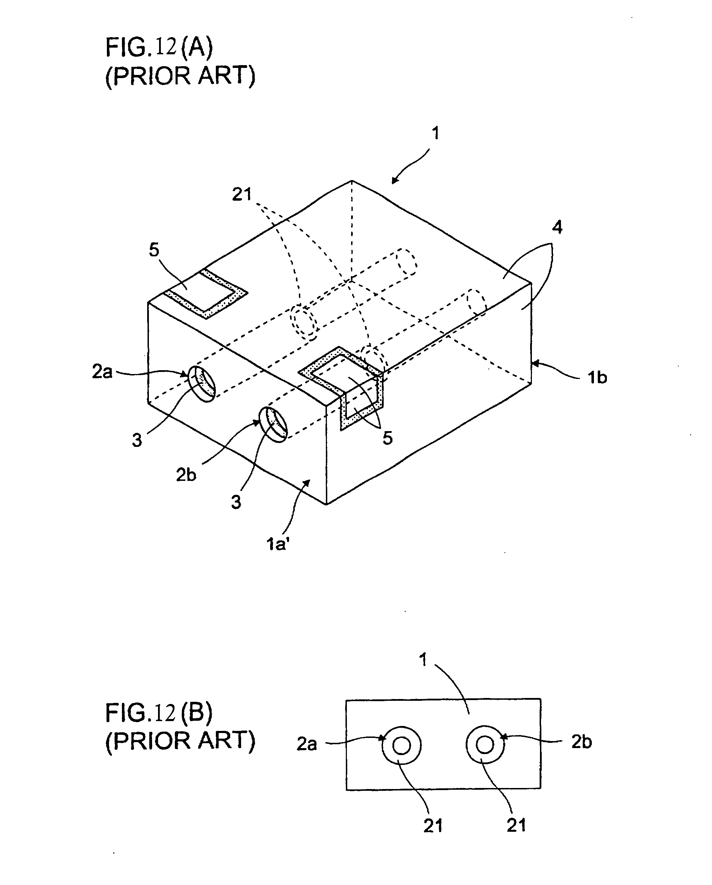

Such a conventional dielectric filter has, for example, the structure shown in Fig. 12(A) and Fig. 12(B). Fig. 12(A) is a perspective view of the dielectric filter with the surface to be mounted on a circuit board being placed upwards. Fig. 12(B) is a view of the resonator holes viewed from one end of the dielectric block. This dielectric filter is formed of a substantially rectangular-parallelepiped-shaped dielectric block 1 in which two resonator holes 2a and 2b pass through one pair of opposing end surfaces of the block and have inner conductors 3 on their inner surfaces. Input and output electrodes 5 are formed on outer surfaces of the dielectric block 1, and an outer conductor 4 is formed on substantially all of the outer surfaces of the block except for the areas where the input and output electrodes 5 are formed.

Near one end surface 1a' of the dielectric block 1, a gap is formed in each of the inner conductors 3 in the resonator holes 2a and 2b so as to open-circuit (separate) the inner conductors 3 from the outer conductor 4 and so as to generate stray capacitances there. The inner conductors 3 are short-circuited (electrically connected) to the outer conductor 4 at the other end surface 1b of the dielectric block 1 and this end surface 1b will be referred to as a short-circuited end face.

The resonator holes 2a and 2b are provided with steps 21 in substantially halfway along the length thereof so that the inner diameters and cross-sectional areas of the holes change between the open end surface 1a' and the short-circuited end face 1b. Hereinafter, portions having a relatively larger inner diameter in the resonator holes are called large-sectional-area portions, and portions having a relatively smaller inner diameter are called small-sectional-area portions.

Since the large-sectional-area portions are formed at the open-circuited end in the structure shown in Figs. 12(A)-12(B), a strong capacitive coupling is generally achieved between the two resonators and filter characteristics having a wide pass-band are obtained.

However, in the conventional dielectric filter described above, the fact that the large-sectional-area portion and the small-sectional-area portion of each resonator hole have circular cross-sections, and that their axes are aligned, places limitations on the degree of freedom in the design of the filter. That is, in practice, the resonant frequency of each resonator and the degree of coupling between the resonators are determined by setting the capacitance (hereinafter called self-capacitance) between each inner conductor and the outer conductor, and the capacitance (hereinafter called mutual capacitance) between the adjacent inner conductors. However, only the distance (pitch) between the resonator holes, the length ratio between the large-sectional-area portion and the small-sectional-area portion, and the inner-diameter ratio between the large-sectional-area portion and the small-sectional-area portion can be specified in this design. Thus, when the outside dimensions of the required dielectric block are restricted, it is difficult to obtain filter characteristics over a wide range, since only the above-mentioned measurements and ratios can be adjusted. Conversely, if a dielectric block satisfies the required filter characteristics, its outside dimensions may not fall in a desired range. EP 0 731 522 A1 describes a dielectric filter having a plurality of resonator cavities in a dielectric block, said resonator cavities comprising a large inner diameter portion, a small inner diameter portion and a step portion formed therebetween.

EP 0 688 059 A1 describes a dielectric filter comprising a dielectric block having an open end surface and a shorted end surface and provided with resonator holes and excitation holes. The resonator holes do not comprise large-sectional area portions and small-sectional area portions.

WO 93/24968 A1 describes discloses a filter duplexer, such as a filter duplexer for a radio transceiver, comprising a series of transmission lines. At least a group of the transmission lines comprise cross-sections elongated in the directions transverse to the longitudinal axis of the transmission lines. The resonator holes do not comprise a large-sectional area portion and a small-sectional area portion.

It is the object of the present invention to provide an improved dielectric filter having an increased degree of freedom in the design of the resonant frequency and the degree of coupling between resonators, and a method of manufacturing the filter.

This object is achieved by a dielectric filter according to claim 1 and by a method according to claim 3.

The present invention provides a dielectric filter, comprising: a dielectric block having an open-circuited end and a short-circuited-end opposed to each other; an outer conductor disposed on an outer surface of said dielectric block; a plurality of resonator holes respectively extending from said open-circuited end to said short-circuited-end of said dielectric block, each hole having a respective inner surface on which an inner conductor is provided; said resonator holes comprising a large-sectional-area portion and a small-sectional-area portion having different respective inner cross-sectional areas, wherein the longitudinal axis of the large sectional areas of a first and a second resonator hole are arranged under an angle with aspect to each other, and the direction of slanting of the longitudinal axis of the first resonator hole is different from the direction of slanting of the longitudinal axis of the second resonator hole. Advantageously the large-sectional-area portion is located at said open-circuited end and said small-sectional-area portion is located at said short-circuited-end. The cross-sectional shape of said large-sectional-area portion is substantially an elongated shape such as an elongated circle or ellipse, and the longitudinal direction of said cross-sectional shape being slanted with respect to the direction in which said plurality of resonator holes are arranged.

Since the cross-sectional shape of the large-sectional-area portion is substantially an elongated shape such as an elongated circle or ellipse, for example, when the large-sectional-area portion is placed at the open-circuited end, the self-capacitance at the open-circuited end is increased and the line impedance of the resonator at the open-circuited end is reduced. Therefore, the resonant frequency is reduced. Conversely, to obtain a desired resonant frequency, the length (axial length) of the dielectric block can be reduced. Another advantage of the cross-sectional shape of the large-sectional-area portion is that the opposing areas of adjacent inner conductors at the open-circuited end can be increased so as to increase the mutual capacitance at the open-circuited end, so that capacitive coupling between adjacent resonators is easily enhanced.

Since the longitudinal direction of the large-sectional-area portion is slanted with respect to the direction in which the plurality of resonators are arranged, when the tilt angle is changed, the self- capacitance at the large-sectional-area portion can be changed over a wide range. Even if the dimensions of the dielectric block are specified, the resonant frequency can be specified over a wide range. Conversely, to obtain a desired resonant frequency, the length of the dielectric block can be specified over a wide range. Also, when the tilt angle is changed, the mutual capacitance can be changed over a wide range so that the range of the degree of coupling between adjacent resonators can be extended.

In the above dielectric filter, the central axis of said small-sectional-area portion may be coaxial with the central axis of said large-sectional-area portion, or may be shifted so that said small-sectional-area portion is eccentric to said large-sectional-area portion.

When the central axis of the small-sectional-area portion is shifted from that of the large-sectional-area portion to be eccentric thereto, the distance between adjacent small-sectional-area portions is changed so that the mutual capacitance between the small-sectional-area portions is changed. When the small-sectional-area portions are disposed at the short-circuited end, for example, if the mutual capacitance at the small-sectional-area portion is reduced, inductive coupling between the resonators is weakened. Therefore, also in this respect, the degree of freedom in the design of the degree of coupling is increased.

The present invention further provides a dielectric duplexer including the above described dielectric filter, and further comprising; an input/output electrode, an input electrode, and an output electrode respectively provided on the outer surface of the dielectric block; some of the resonator holes in the filter being connected between said input/output electrode and said input electrode to define a transmission filter; and the others of the resonator holes being connected between said input/output electrode and said output electrode to define a receiving filter.

By the above structure, a duplexer having desired filter characteristics is easily obtained.

The present invention further provides a method of manufacturing the above-described dielectric filter or dielectric duplexer, comprising the steps of: adjusting the self-capacitance of each said resonator hole and the mutual capacitance between adjacent said resonator holes by changing the tilt angle of the longitudinal direction of the cross-section of the large-sectional-area portion with respect to the direction in which said plurality of resonator holes are arranged, wherein the longitudinal axes of the large sectional areas of a first and a second resonator hole are arranged under an angle with respect to each other, and the direction of slanting of the longitudinal axis of the first resonator hole is different from the direction of slanting of the longitudinal axis of the second resonator hole.

The above method may further comprise the steps of: adjusting the self-capacitance of each said resonator hole and the mutual capacitance between adjacent said resonator holes by changing the amount that the central axis of said small-sectional-area portion is shifted with respect to the central axis of said large-sectional-area portion.

The present invention further provides a radio transceiver including the above-described dielectric duplexer, further comprising: a transmission circuit connected to said input electrode for generating a transmission signal; a reception circuit connected to said output electrode for receiving a reception signal; and an antenna terminal connected to said input/output electrode.

The present invention further provides the above-described radio transceiver, wherein an antenna is connected to said input/output electrode via said antenna terminal.

### BRIEF DESCRIPTION OF THE DRAWINGS

Fig. 1 shows a perspective view of a dielectric filter according to a first embodiment.

Fig. 2(A) and Fig. 2(B) show an elevation and a cross-section of the dielectric filter.

Fig. 3(A), Fig. 3(B) and Fig. 3 (C) show elevations of some dielectric filters having different tilt angles of the longitudinal axes of their large-sectional-area portions.

Fig. 4(A) and Fig. 4(B) show an elevation and a cross-section of a dielectric filter according to a second embodiment.

Fig. 5(A) and Fig. 5(B) show an elevation and a cross-section of another dielectric filter according to the second embodiment.

Fig. 6(A) and Fig. 6(B) show an elevation and a cross-section of still another dielectric filter according to the second embodiment.

Fig. 7(A) and Fig. 7(B) show an elevation and a cross-section of a dielectric filter according to a third embodiment.

Fig. 8(A), Fig. 8(B) and Fig. 8(C) show elevations of dielectric filters according to a fourth embodiment.

Fig. 9(A), Fig. 9(B), Fig. 9(C) and Fig. 9(D) show projective views of a dielectric duplexer according to a fifth embodiment.

Fig. 10(A), Fig. 10(B) Fig. 10(C) and Fig. 10(D) show projective views of a dielectric duplexer according to a sixth embodiment.

Fig. 11 shows a block diagram of a *radio* transceiver including a dielectric duplexer according to an seventh embodiment of the present invention.

Fig. 12(A) and Fig. 12(B) show a perspective view and an elevation of a conventional dielectric filter.

Other features and advantages of the present invention will become apparent from the following description of embodiments of the invention which refers to the accompanying drawings.

### DESCRIPTION OF EMBODIMENTS OF THE INVENTION

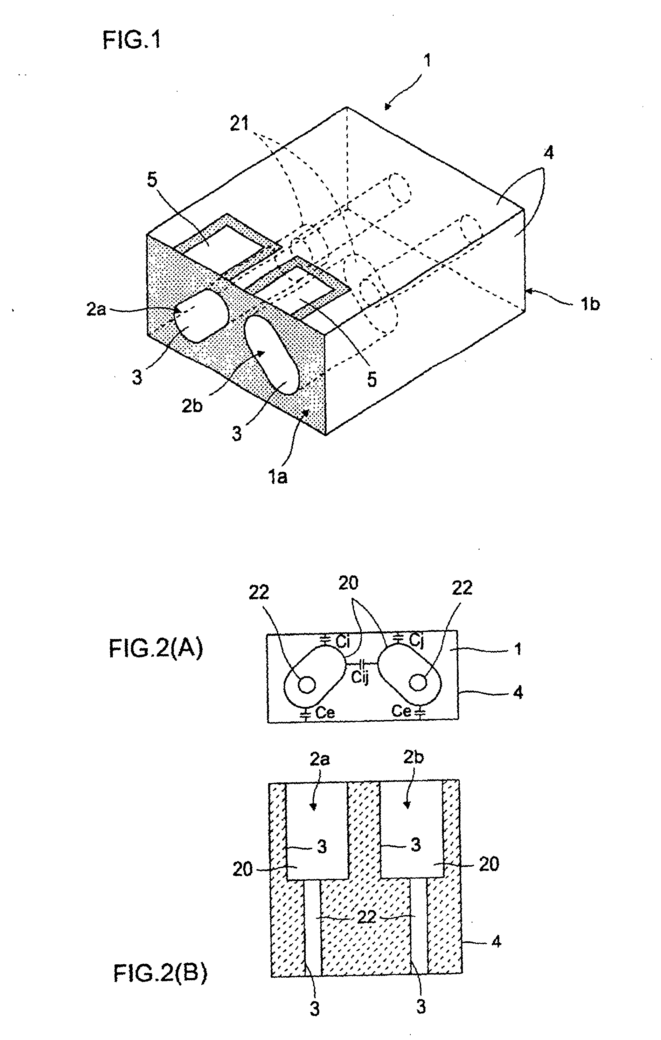

A structure and a manufacturing method for a dielectric filter according to a first embodiment of the present invention will be described below by referring to Fig. 1 to Fig. 3.

Fig. 1 is a perspective view with a surface to be mounted to a circuit board being placed upwards. This dielectric filter is formed of a substantially rectangular-parallelepiped dielectric block in which resonator holes 2a and 2b pass through one pair of opposing surfaces of the block and have inner conductors 3 on their inner surfaces. Input/output electrodes 5 are formed on an outer surface of the dielectric block 1, and an outer conductor 4 is formed on the outer surface except for the areas where the input/output electrodes 5 are formed and except for one of said opposing surfaces 1a at which the open-circuited ends of the resonator holes 2a and 2b are located. Therefore, the surface 1a is referred to as an open end face, and the other end surface 1b serves as a short-circuited end face. As shown in the figure, the resonator holes 2a and 2b are provided with steps 21 at which their cross-sectional area changes substantially halfway along their length so that a large-sectional-area portion is disposed near the open-circuited end face 1a and a small-sectional-area portion is disposed near the short-circuited end face 1b.

Fig. 2(A) and Fig. 2(B) show an elevation of the dielectric filter shown in Fig. 1, viewed from the open end, and a cross-section taken on a plane passing through the two resonator holes. As shown in Fig. 1, Fig. 2(A) and Fig. 2(B), the resonator holes 2a and 2b have their large-sectional-area portions 20 at the open-circuited end and their small-sectional-area portions 22 at the short-circuited end. The large-sectional-area portions 20 have an elongated circular cross-section (here, a combination of a rectangle and two semicircles, for example), when viewed in a plane perpendicular to their axes. The longitudinal axes of the cross-sections are slanted at specified angles with respect to a plane in which the two resonator holes 2a and 2b are arranged. As shown in Fig. 2(A), with this structure, self-capacitances Ci and Cj are generated between the outer conductor 4 and the inner conductors 3 at the open-circuited end, respectively. A mutual capacitance Cij is generated between the inner conductors of the adjacent resonators at the open-circuited end. In addition, external coupling capacitances Ce are generated between the input/output electrodes 5 and the inner conductors of the resonators at the open-circuited end.

Since the large-sectional-area portions 20 at the open-circuited end have the elongated circular cross-section, the self-capacitances are increased and the line impedances of the resonators at the open-circuited end are reduced. Therefore, the resonant frequency is reduced. Conversely, the large-sectional-area portions enable the axial length of the dielectric block 1 to be reduced, without increasing the resonant frequency. Also, since the opposing areas of the adjacent inner conductors at the open-circuited end are increased, so as to increase the mutual capacitance, the capacitive coupling between the resonators is enhanced and the degree of coupling is increased. Also, the self-capacitances Ci and Cj change as a function of the angles at which the longitudinal directions of the large-sectional-area portions 20 are slanted with respect to the plane in which the resonator holes are arranged. With this, even if the cross-section of the large-sectional-area portions 20 is not changed, the resonant frequency or the axial length of the dielectric block can be changed. Since the mutual capacitance Cij also changes according to the tilt angles, the degree of coupling between the resonators can be specified over a wide range.

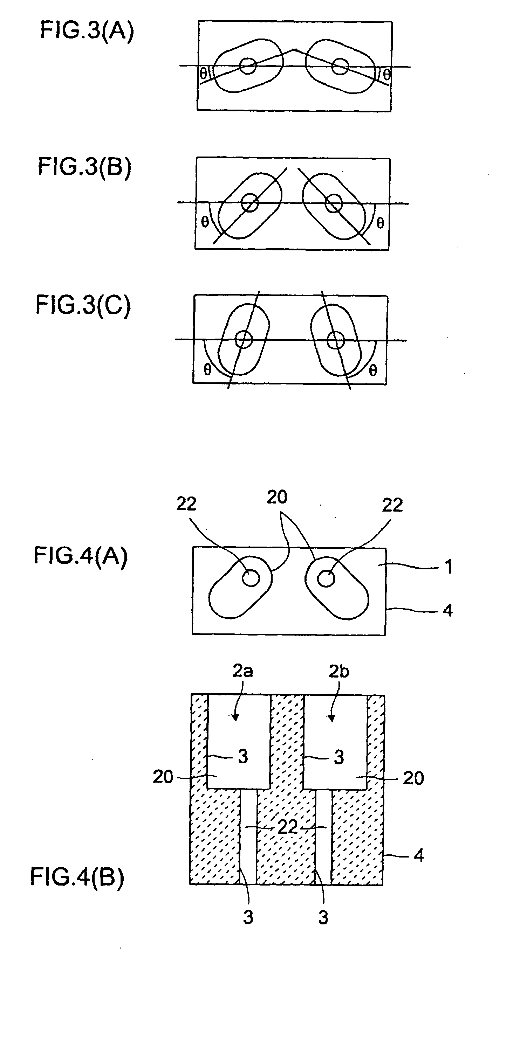

Fig. 3(A), Fig. 3(B) and Fig. 3(c) show views of dielectric filters having different tilt angles, viewed from their open-circuited ends. Since the self-capacitances Ci and Cj and the mutual capacitance Cij change as the tilt angles of the longitudinal directions of the large-sectional-area portions change, even if the distance between the small-sectional-area portions of the adjacent resonator holes or the cross-sectional shape of the large-sectional-area portions does not change, the resonant frequencies of the resonators, the axial length of the dielectric block, or the degree of coupling between the adjacent resonators can be specified over a wide range.

Further, regarding the external coupling capacitances Ce between the input/output electrodes 5 and the inner conductors at the open-circuited end, it is clearly understood from Fig. 1 and Figs. 2(A), 2(B) that they also change as the tilt angles of the large-sectional-area portions 20 change. With the use of this relationship, the desired external coupling capacitances Ce can be obtained by setting the tilt angles of the large-sectional-area portions 20 without changing the input and output electrodes 5. Therefore, as shown in Fig. 1, the invention also increases the degree of freedom in manufacturing external coupling capacitances in the dielectric filter in which the input and output electrodes generate the external coupling capacitances with the large-sectional-area portions formed in the dielectric block.

A structure and a manufacturing method for a dielectric filter according to a second embodiment of the present invention will be described below by referring to Fig. 4(A) to Fig. 6(B).

In the first embodiment, the central axes of the small-sectional-area portions of the resonator holes are aligned with the central axes of the large-sectional-area portions. In the second embodiment, the central axes of small-sectional-area portions are shifted from those of large-sectional-area portions to set the small-sectional-area portions eccentric to the large-sectional-area portions. For example, as shown in Fig. 4(A) and Fig. 4(B), the central axes of small-sectional-area portions 22 are set eccentric to those of large-sectional-area portions 20 such that the distance between two small-sectional-area portions 20 in adjacent resonator holes is reduced. With this structure, the mutual capacitance between the small-sectional-area portions at the short-circuited end increases, inductive coupling between the resonators is strengthened, and thereby capacitive coupling as a whole is reduced. The degree of coupling between the resonators is set to a low level.

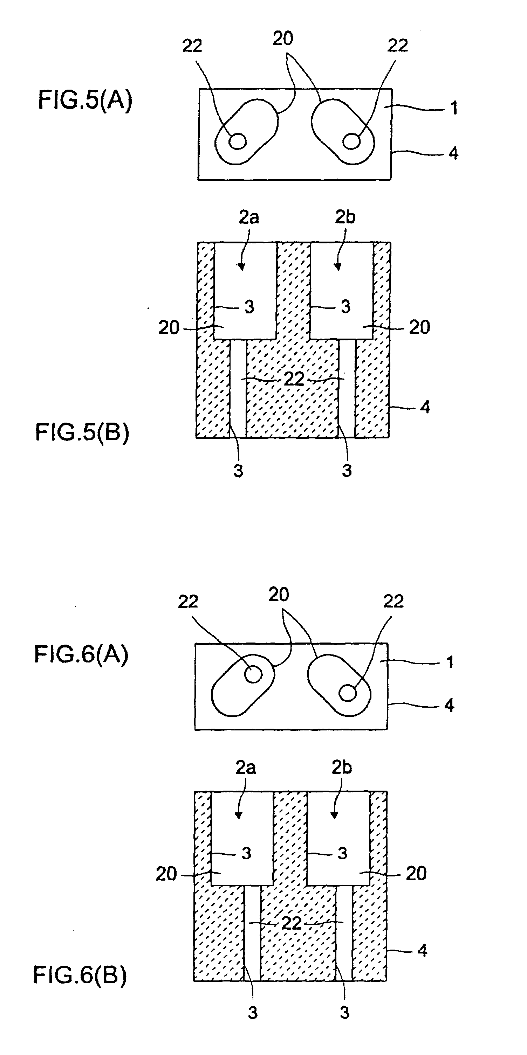

Conversely, for example, as shown in Fig. 5(A) and Fig. 5(B), the central axes of small-sectional-area portions 22 are set eccentric to those of large-sectional-area portions 20 such that the distance between two small-sectional-area portions 20 in adjacent resonator holes is increased. With this structure, the mutual capacitance between the small-sectional-area portions is reduced, inductive coupling between the resonators is reduced, and thereby capacitive coupling as a whole is increased. The degree of coupling between the resonators is set to a high level.

Also, the directions in which the central axes of small-sectional-area portions are shifted with respect to the central axes of large-sectional-area portions in respective adjacent resonator holes may be asymmetric as shown in Fig. 6(A) and Fig. 6(B).

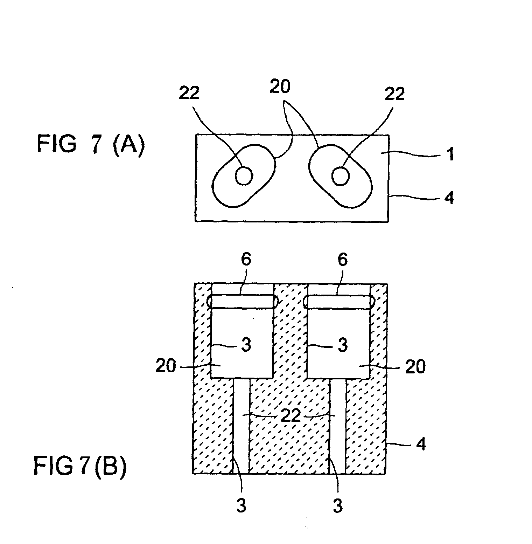

Fig. 7(A) and Fig. 7(B) show an elevation and a cross-section of a dielectric filter according to a third embodiment. In the first and second embodiments, one open end face of the dielectric block has no outer conductor. In the third embodiment, a dielectric filter may be configured as shown in Fig. 7(A) and Fig. 7(B) with respective gaps 6 where no conductors are formed near openings of the resonator holes so that open ends are formed inside the resonator holes. The gaps 6 may be formed by first forming inner conductors on the whole inner surfaces of the resonator holes, and then removing parts of the inner conductors at specified positions.

In the first through third embodiments, the large-sectional-area portions are placed at the open-circuited end and the small-sectional-area portions are placed at the short-circuited end. Conversely, a dielectric filter may be configured with large-sectional-area portions placed at the short-circuited end and the small-sectional-area portions placed at the open-circuited end. In this case, a change in a resonant frequency and a coupling relationship (whether it is capacitive coupling or inductive coupling) can be obtained by arrangements that are the reverse of those in the above embodiments.

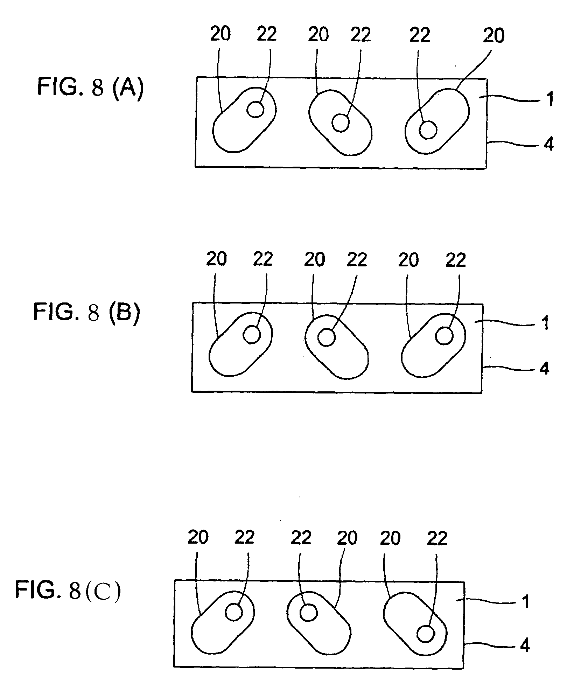

Figs. 8(A) to 8(C) are elevational views showing several dielectric filters according to a fourth embodiment. In the first through third embodiments, there are two resonators formed in the single dielectric block. The present invention can also be applied to a case in which three or more resonator holes are formed, by changing the self-capacitances and the mutual capacitance according to the tilt angles of the longitudinal axes of the large-sectional-area portions, and by changing the mutual capacitance according to the eccentric positions of the small-sectional-area portions. In the fourth embodiment, three resonator holes are provided and each resonator hole has a large-sectional-area portion 20 and a small-sectional-area portion 22. Even in a dielectric filter having such a structure, the desired filter characteristics can be obtained by appropriately specifying the tilt angles of the longitudinal directions of the large-sectional-area portion in each resonator hole, and the eccentric direction and eccentric distance of the small-sectional-area portion.

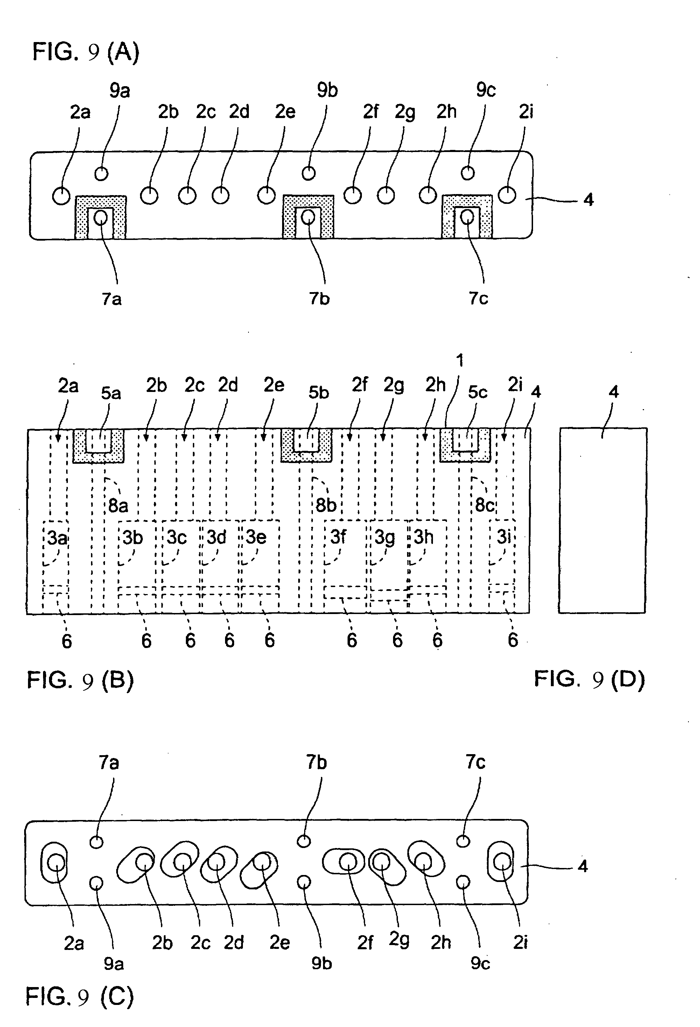

The structure of a dielectric duplexer according to a fifth embodiment will be described below by referring to Fig. 9(A) to 9(D).

Fig. 9(A) to Fig. 9(D) show projective views of the dielectric duplexer. Fig. 9(A) is a plan, Fig. 9(B) is an elevation, Fig. 9(C) is a bottom view, and Fig. 9(D) is a right-hand side view of the dielectric duplexer. This dielectric duplexer is formed of a rectangular-parallelepiped dielectric block 1 in which various holes and conductors are made. Specifically, the block is provided with resonator holes 2a, 2b, 2c, 2d, and 2e for a receiving filter used when the dielectric duplexer serves as an antenna multiplexer, resonator holes 2f, 2g, 2h, and 2i for a transmission filter used when the dielectric duplexer serves as an antenna multiplexer, and input and output holes 7a, 7b, and 7c.

As shown in Fig. 9(B), each resonator hole is of a step type in which the inner diameter changes approximately halfway along the length of the resonator between the upper half and the lower half, and its inner surface is provided with an inner conductor. Inner conductors 3a, 3b, 3c, 3d, 3e, 3f, 3g, 3h, and 3i are formed on the inner surfaces of the resonator holes 2a, 2b, 2c, 2d, 2e, 2f, 2g, 2h, and 2i, respectively. Input-and-output inner conductors 8a, 8b, and 8c are formed on the inner surfaces of the input and output holes 7a, 7b, and 7c. In this embodiment, the input-and-output inner conductors 8a, 8c, and 8b correspond to an output electrode, an input electrode, and an input/output electrode according to the present invention, respectively. In each inner conductor, a gap 6 where no conductor is formed is provided near the end of the large-sectional-area side of the step hole and the gap 6 serves as an open end of the corresponding resonator.

Ground holes 9a, 9b, and 9c are also shown in the figure. They are straight, have a constant inner diameter, and are provided with conductors on the whole inner surfaces. On the outside surfaces of the dielectric block 1, input and output electrodes 5a, 5b, and 5c continuously connected to the input-and-output inner conductors 8a, 8b, and 8c, respectively, are formed, and an outer conductor 4 is formed substantially on all six of its surfaces except for the areas where the input and output electrodes are formed.

The dielectric duplexer configured as described above operates in the following way. The inner conductors 3b, 3c, 3d, and 3e are comb-line coupled with each other, and the inner conductors 3f, 3g, and 3h are also comb-line coupled with each other. The output inner conductor 8a formed in the output hole 7a is coupled with the inner conductors 3a and 3b, the input-and-output inner conductor 8b is coupled with the inner conductor 3e and 3f, and the input inner conductor 8c is coupled with the inner conductor 3h and 3i. With this arrangement, the inner conductors 3a and 3i work as trap circuits. Therefore, the portion between the electrodes 5a and 5b serves as a bandpass filter having a trap, and the portion between the electrodes 5b and 5c serves as a bandpass filter having a trap.

The ground hole 9a breaks the coupling between the inner conductors 3a and 3b by its blocking effect, the ground hole 9b breaks the coupling between the inner conductors 3e and 3f by its blocking effect, and the ground hole 9c breaks the coupling between the inner conductors 3h and 3i by its blocking effect.

In the embodiment shown in Fig. 9(A) to Fig. 9(D), by making the large-sectional-area portions with the cross-sectional shape of an elongated circle, and shifting the axes of the large-sectional-area portions and the small-sectional-area portions with respect to each other, the self-capacitance of the large-sectional-area portions and the mutual capacitance between adjacent resonator holes are specified to set the degree of coupling between the adjacent resonators. The degree of coupling between the input-and-output inner conductors and inner conductors adjacent thereto is also specified. Therefore, a dielectric duplexer having the desired filter characteristics is easily obtained.

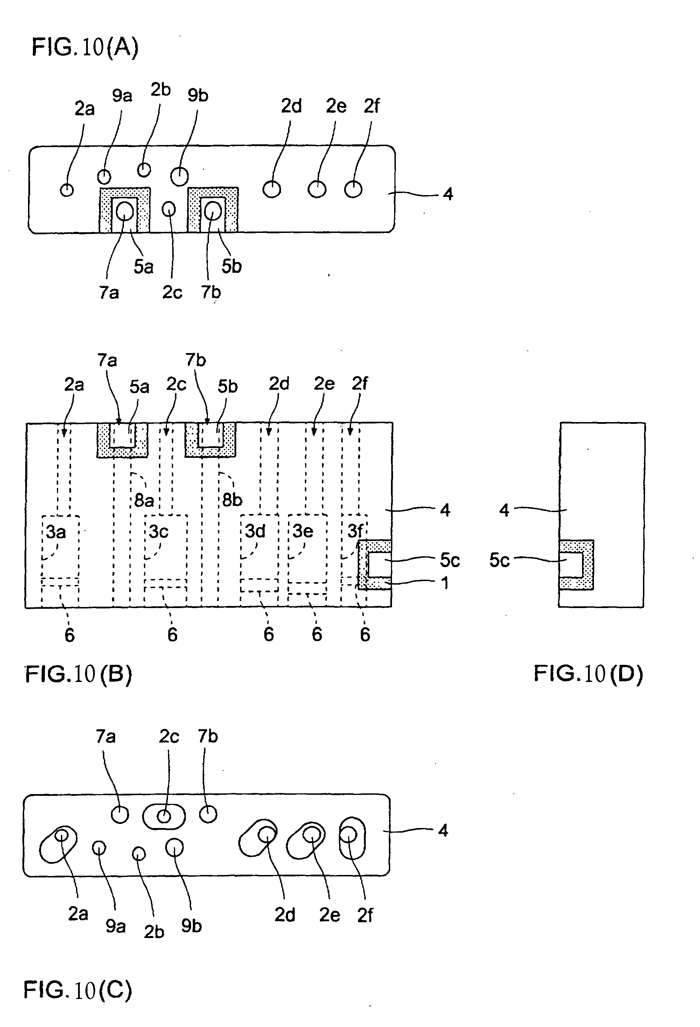

The structure of a dielectric duplexer according to a sixth embodiment will be described below by referring to Fig. 10(A) to Fig. 10(D).

Fig. 10(A) to Fig. 10(D) show projective views of the dielectric duplexer. Fig. 10(A) is a plan, Fig. 10(B) is an elevation, Fig. 10(C) is a bottom view, and Fig. 10(D) is a right-hand side view of the dielectric duplexer. This dielectric duplexer is formed of a rectangular-parallelepiped dielectric block 1 in which various holes and conductors are made. Specifically, the block is provided with resonator holes 2a, 2b, and 2c for a transmission filter used when the dielectric duplexer serves as an antenna multiplexer, resonator holes 2d, 2e, and 2f for a receiving filter used when the dielectric duplexer serves as an antenna multiplexer, and input and output holes 7a and 7b.

As shown in Fig. 10(B), each resonator hole is of a step type in which the inner diameter changes approximately between the upper half and the lower half, as shown in Fig. 10(B), and its inner surface is provided with an inner conductor. Inner conductors 3a, 3c, 3d, 3e, and 3f are formed on the inner surfaces of the resonator holes 2a, 2c, 2d, 2e, and 2f, respectively. The resonator hole 2b is of a step type having a large inner diameter portion in the upper half of Fig. 10(B) and it has an inner conductor on its inner surface. In each inner conductor, a gap 6 where no conductor is formed is provided near the end of the large-sectional-area side of the step hole and this gap serves as an open end of the corresponding resonator.

Input-and-output inner conductors 8a and 8b are formed on the inner surfaces of the input and output holes 7a and 7b. In this embodiment, the input-and-output inner conductors 8a and 8b correspond to an input electrode and an input/output electrode according to the present invention, respectively.

Ground holes 9a and 9b are also shown in the figure. They are straight, have a constant inner diameter, and are provided with conductors on their whole inner surfaces. On outside surfaces of the dielectric block 1, input and output electrodes 5a and 5b continuously connected to the input-and-output inner conductors 8a and 8b, respectively, and an input/output electrode 5c coupled with the inner conductor 3f are formed, and an outer conductor 4 is formed substantially on all six of the outer surfaces except for the areas where these input and output electrodes are formed. In the present embodiment, the input/output electrode 5c corresponds to an output electrode according to the present invention.

The dielectric duplexer configured as described above operates in the following way. The inner conductors formed on the resonator holes 2d, 2e, and 2f are comb-line coupled with each other. Therefore, the portion between the input and output electrodes 5b and 5c serves as a bandpass filter. The inner conductor 3c is electro-magnetically coupled with the input-and-output inner conductors 8a and 8b. The inner conductors formed on the resonator holes 2a and 2b are also electro-magnetically coupled with the input-and-output inner conductors 8a and 8b. With this arrangement, the portions between the input and output electrodes 5a and 5b are π/2-phase-shift coupled with each other through the inner conductor 3c and they serve as a band-block filter formed of a two-stage trap circuit. The ground hole 9a breaks the coupling between the inner conductors of the resonator holes 2a and 2b by its blocking effect, and the ground hole 9b breaks the coupling between the inner conductor of the resonator hole 2b and the input-and-output inner conductor 8b by its blocking effect.

As described above, since the inner conductor 3c serving as the final stage of the transmission filter is π/2-phase-shift coupled with the input-and-output inner conductor 8b by electro-magnetically coupling, the impedance of the transmission filter viewed from the input-and-output inner conductor 8b is substantially open in an attenuation band of the transmission filter. Therefore, a signal received from the antenna is not input to the transmission filter and is only led to the receiving filter.

Also in the sixth embodiment, by making the large-sectional-area portions in the cross-sectional shape of an elongated circle, and shifting the locations of the axes of the large-sectional-area portions and/or the small-sectional-area portions, the self-capacitance of the large-sectional-area portions and the mutual capacitance between adjacent resonator holes are specified to set the degree of coupling between the adjacent resonators. The degree of coupling between the input-and-output inner conductors and the inner conductors adjacent thereto is also specified. Therefore, a dielectric duplexer having the desired filter characteristics is easily obtained.

In the above embodiments, the large-sectional-area portions have an elongated-circular cross- section. However, if it has an elliptical cross-section, a cross-section similar in shape to an ellipse, or another elongated cross-section such as a rectangle, the same operations and the same advantages are obtained.

Further, the step between the large and small portions is not necessarily halfway along the length of each resonator. The step can be located to the other portion between the two ends of each resonators.

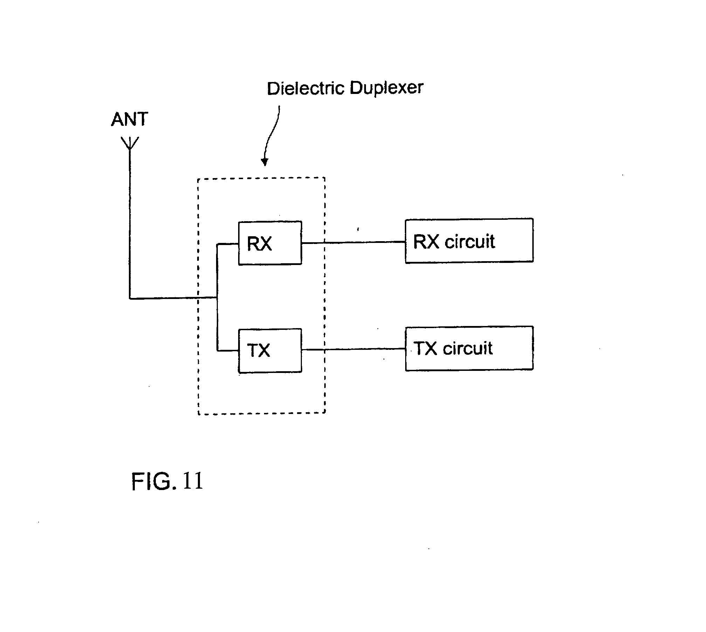

Fig. 11 shows a block diagram of a radio transceiver including the dielectric duplexer of the present invention.

In the radio transceiver, a transmission filter portion TX of the dielectric duplexer is connected to a transmission (TX) circuit via an input terminal IT, and the receiving filter portion RX of the dielectric duplexer is connected to a receiving (RX) circuit via an output terminal OT. Further, both the transmission filter portion TX and the receiving filter portion RX are connected to an antenna ANT via an input/output terminal I/OT.

A signal transmitted to the radio transceiver is received by the antenna ANT, and a signal representative thereof is applied to the receiving filter portion RX. The receiving filter portion RX generates a filtered signal which is applied to the receiving (RX) circuit. The receiving (RX) circuit performs functions such as downconversion and demodulation of the receiving signal, as is conventional. The transmission (TX) circuit is operative to modulate and up-convert in frequency a signal to be transmitted by the radio transceiver, and to generate a signal which is applied to the transmission filter portion TX. The transmission filter portion TX is operative to generate a filtered signal which is applied to the antenna ANT to be transmitted therefrom.

## Claims

1. A dielectric filter, comprising:
a dielectric block (1) having two ends (1a, 1b) opposed to each other;
an outer conductor (4) disposed on an outer surface of said dielectric block;
a plurality of resonator holes (2a, 2b; 2a-2i) extending between said two ends (1a, 1b) of said dielectric block (1), each hole (2a, 2b; 2a - 2i) having a respective inner surface on which an inner conductor (3; 3a - 3i) is provided, each inner conductor (3) being connected to said outer conductor (4) at one end (1b) to form a short-circuited end of the corresponding hole (2a, 2b; 2a - 2i), and being isolated from said outer conductor (4) at the other end (1a) to form an open-circuited end of the corresponding hole (2a, 2b; 2a - 2i);
a first one of said resonator holes comprising a first large-sectional-area portion (20) and a first small-sectional-area portion (22) arranged so that said first hole (2a, 2b; 2a - 2i) has different respective inner diameters at said open-circuited end and said short-circuited-end;
the cross-sectional shape of said first large-sectional-area portion (20) being an elongated shape having a first longitudinal axis, said first longitudinal axis being angled with respect to a plane in which said plurality of resonator holes (2a, 2b; 2a - 2i) are arranged;
a second one of said resonator holes comprising a second large-sectional-area portion (20) and a second small-sectional-area portion (22) arranged so that said second hole (2a, 2b; 2a - 2i) has different respective inner diameters at said open-circuited end and said short-circuited-end; and
the cross-sectional shape of said second large-sectional-area portion (20) being an elongated shape having a second longitudinal axis, said second longitudinal axis being angled with respect to said plane,
**characterized in that**
the first longitudinal axis and the second longitudinal axis are arranged under an angle with respect to each other, and
the direction of slanting of the first longitudinal axis is different from the direction of slanting of the second longitudinal axis.

2. The dielectric filter according to claim 1, wherein:
said small-sectional-area portion (22) has a central axis which is shifted from a central axis of said large-sectional-area portion (20) such that said small-sectional-area portion (22) is eccentric to said large-sectional-area portion (20).

3. A method of manufacturing a dielectric filter comprising the steps of:
forming a dielectric block (1) having two ends (1a, 1b) opposed to each other;
forming an outer conductor (4) on an outer surface of said dielectric block (1);
forming a plurality of resonator holes (2a, 2b; 2a - 2i) extending between said two ends (1a, 1b) of said dielectric block (1), each hole (2a, 2b; 2a-2i) having a respective inner surface;
forming a respective inner conductor (3; 3a - 3i) on each said inner surface, each inner conductor (3; 3a - 3i) being connected to said outer conductor (4) at one end (1b) to form a short-circuited end of the corresponding hole (2a, 2b; 2a - 2i), and being isolated (6) from said outer conductor (4) at the other end (1a) to form an open-circuited end of the corresponding hole (2a, 2b; 2a - 2i);
forming a first one of said resonator holes (2a, 2b; 2a - 2i) with a first large-sectional-area portion (20) and a first small-sectional-area portion (22) arranged so that said first hole (2a, 2b; 2a-2i) has different respective inner diameters at said open-circuited end and said short-circuited-end;
the cross-sectional shape of said first large-sectional-area portion (20) being an elongated shape which defines a first longitudinal axis, said first longitudinal axis being angled with respect to a plane in which said plurality of resonator holes (2a, 2b; 2a - 2i) are arranged;
forming a second one of said resonator holes (2a, 2b; 2a - 2i) with a second large-sectional-area portion (20) and a second small-sectional-area portion (22) arranged so that said second hole (2a, 2b; 2a-2i) has different respective inner diameters at said open-circuited end and said short-circuited-end;
the cross-sectional shape of said second large-sectional-area portion (20) being an elongated shape which defines a second longitudinal axis, said second longitudinal axis being angled with respect to said plane; and
adjusting the self-capacitance (Cᵢ, Cⱼ) of said at least one resonator hole (2a, 2b; 2a - 2i) and the mutual capacitance (Cᵢⱼ) between a pair of adjacent said resonator holes (2a, 2b; 2a - 2i) including said at least one resonator hole (2a, 2b; 2a - 2i) by changing the angles of the first and second longitudinal axis of the cross-section of the first and second large-sectional-area portion (20), respectively, with respect to said plane in which said plurality of resonator holes (2a, 2b; 2a - 2i) are arranged,
**characterized in that**
the first longitudinal axis and the second longitudinal axis are arranged under an angle with respect to each other, and
the direction of slanting of the first longitudinal axis is different from the direction of slanting of the second longitudinal axis.

4. A method according to claim 3, further comprising the steps of:
forming said small-sectional-area portion (22) with a central axis which is shifted from a central axis of said large-sectional-area portion (20) such that said small-sectional-area portion (22) is eccentric to said large-sectional-area portion (20); and
adjusting the self-capacitance (Cᵢ, Cⱼ) of said at least one resonator hole (2a, 2b; 2a - 2i) and the mutual capacitance (Cᵢⱼ) between a pair of adjacent said resonator holes (2a, 2b; 2a - 2i) including said at least one resonator hole (2a, 2b; 2a - 2i) by changing the amount by which the central axis of said small-sectional-area portion (22) is shifted from the central axis of said large-sectional-area portion (20).

5. A dielectric duplexer comprising:
a dielectric filter according to claim 1 or 2;
an input/output electrode (5b), an input electrode (5c), and an output electrode (5a) respectively provided on the outer surface of said dielectric block (1);
a first group (2f - 2h) of said resonator holes (2a - 2i) being disposed between said input/output electrode (5b) and said input electrode (5c) to define a transmission filter; and
a second group (2b - 2e) of said resonator holes (2a - 2i) being disposed between said input/output electrode (5b) and said output electrode (5a) to define a receiving filter.

6. A method of manufacturing a dielectric duplexer comprising the steps of:
forming a dielectric filter according to claim 3 or 4;
forming an input/output electrode (5b), an input electrode (5c), and an output electrode (5a) on the outer surface of said dielectric block (1);
arranging a first group (2f - 2h) of said resonator holes (2a - 2i) disposed between said input/output electrode (5b) and said input electrode (5c) to define a transmission filter; and
arranging a second group (2b - 2e) of said resonator holes (2a - 2i) disposed between said input/output electrode (5b) and said output electrode (5a) to define a receiving filter.

7. A radio transceiver including a dielectric duplexer (RX, TX) according to claim 5,said radio transceiver further comprising:
a transmission circuit for generating a transmission signal and being connected to said input electrode (5c);
a reception circuit for receiving a reception signal and being connected to said output electrode (5a); and
an antenna terminal connected to said input/output electrode (5b).

8. A radio transceiver as in claim 7, further comprising an antenna (ANT) connected to said input/output electrode (5b) via said antenna terminal.

## Patentansprüche

1. Ein dielektrisches Filter mit folgenden Merkmalen:
einem dielektrischen Block (1), der zwei Enden (1a, 1b) aufweist, die einander gegenüberliegen;
einem äußeren Leiter (4), der auf einer äußeren Oberfläche des dielektrischen Blocks angeordnet ist;
einer Mehrzahl von Resonatorlöchern (2a, 2b; 2a - 2i), die sich zwischen den beiden Enden (1a, 1b) des dielektrischen Blocks (1 erstrecken, wobei jedes Loch (2a, 2b; 2a - 2i) eine jeweilige innere Oberfläche aufweist, auf der ein innerer Leiter (3; 3a - 3i) vorgesehen ist, wobei jeder innere Leiter (3) mit dem äußeren Leiter (4) an einem Ende (1b) verbunden ist, um ein kurzgeschlossenes Ende des entsprechenden Lochs (2a, 2b; 2a - 2i) zu bilden, und von dem äußeren Leiter (4) an dem anderen Ende (1a) getrennt ist, um ein Leerlaufende des entsprechenden Lochs (2a, 2b; 2a-2i) zu bilden,
wobei ein erstes der Resonatorlöcher einen ersten Abschnitt (20) mit großer Querschnittsfläche und einen ersten Abschnitt (22) mit kleiner Querschnittsfläche aufweist, die so angeordnet sind, daß das erste Loch (2a, 2b; 2a - 2i) jeweilige unterschiedliche innere Durchmesser an dem Leerlaufende und dem kurzgeschlossenen Ende aufweist,
wobei die Querschnittsform des ersten Abschnitts (20) mit großer Querschnittsfläche eine längliche Form ist, die eine erste Längsachse aufweist, wobei die erste Längsachse bezüglich einer Ebene gewinkelt ist, in der die Mehrzahl von Resonatorlöchern (2a, 2b; 2a - 2i) angeordnet ist,
wobei ein zweites der Resonatorlöcher einen zweiten Abschnitt (20) mit großer Querschnittsfläche und einen zweiten Abschnitt (22) mit kleiner Querschnittsfläche aufweist, die so angeordnet sind, daß das zweite Loch (2a, 2b; 2a - 2i) jeweilige unterschiedliche innere Durchmesser an dem Leerlaufende und dem kurzgeschlossenen Ende aufweist, und
wobei die Querschnittsform des zweiten Abschnitts (20) mit großer Querschnittsfläche eine längliche Form ist, die eine zweite Längsachse aufweist, wobei die zweite Längsachse bezüglich der Ebene gewinkelt ist,
**dadurch gekennzeichnet, daß**
die erste Längsachse und die zweite Längsachse unter einem Winkel bezüglich einander angeordnet sind, und
die Richtung einer Schräglage der ersten Längsachse sich von der Richtung einer Schräglage der zweiten Längsachse unterscheidet.

2. Das dielektrische Filter gemäß Anspruch 1, bei dem:
der Abschnitt (22) mit kleiner Querschnittsfläche eine Mittelachse aufweist, die von einer Mittelachse des Abschnitts (20) mit großer Querschnittsfläche derart verschoben ist, daß der Abschnitt (22) mit kleiner Querschnittsfläche exzentrisch zu dem Abschnitt (20) mit großer Querschnittsfläche ist.

3. Ein Verfahren zum Herstellen eines dielektrischen Filters, mit folgenden Schritten:
Bilden eines dielektrischen Blocks (1), der zwei Enden (1a, 1b) aufweist, die einander gegenüberliegen;
Bilden eines äußeren Leiters (4) auf einer äußeren Oberfläche des dielektrischen Blocks (1);
Bilden einer Mehrzahl von Resonatorlöchern (2a, 2b; 2a - 2i), die sich zwischen den beiden Enden (1a, 1b) des dielektrischen Blocks (1) erstrecken, wobei jedes Loch (2a, 2b; 2a - 2i) eine jeweilige innere Oberfläche aufweist;
Bilden eines jeweiligen inneren Leiters (3; 3a - 3i) auf jeder inneren Oberfläche, wobei jeder innere Leiter (3; 3a - 3i) mit dem äußeren Leiter (4) an einem Ende (1b) verbunden ist, um ein kurzgeschlossenes Ende des entsprechenden Lochs (2a, 2b; 2a - 2i) zu bilden, und von dem äußeren Leiter (4) an dem anderen Ende (1a) getrennt ist (6), um ein Leerlaufende des entsprechenden Lochs (2a, 2b; 2a - 2i) zu bilden;
Bilden eines ersten der Resonatorlöcher (2a, 2b; 2a-2i) mit einem ersten Abschnitt (20) mit großer Querschnittsfläche und einem ersten Abschnitt (22) mit kleiner Querschnittfläche, die so angeordnet sind, daß das erste Loch (2a, 2b; 2a - 2i) jeweilige unterschiedliche innere Durchmesser an dem Leerlaufende und dem kurzgeschlossenen Ende aufweist,
wobei die Querschnittsform des ersten Abschnitts (20) mit großer Querschnittsfläche eine längliche Form ist, die eine erste Längsachse definiert, wobei die erste Längsachse bezüglich einer Ebene gewinkelt ist, in der die Mehrzahl von Resonatorlöchern (2a, 2b; 2a - 2i) angeordnet ist;
Bilden eines zweiten der Resonatorlöcher (2a, 2b; 2a-2i) mit einem zweiten Abschnitt (20) mit großer Querschnittsfläche und einem zweiten Abschnitt (22) mit kleiner Querschnittsfläche, die so angeordnet sind, daß das zweite Loch (2a, 2b; 2a - 2i) jeweilige unterschiedliche innere Durchmesser an dem Leerlaufende und dem kurzgeschlossenen Ende aufweist,
wobei die Querschnittsform des zweiten Abschnitts (20) mit großer Querschnittsfläche eine längliche Form ist, die eine zweite Längsachse definiert, wobei die zweite Längsachse bezüglich der Ebene gewinkelt ist; und
Einstellen der Eigenkapazität (Cᵢ, Cⱼ) des zumindest einen Resonatorlochs (2a, 2b; 2a - 2i) und der gegenseitigen Kapazität (Cᵢⱼ) zwischen einem Paar benachbarter Resonatorlöcher (2a, 2b; 2a - 2i), die das zumindest eine Resonatorloch (2a, 2b; 2a - 2i) umfassen, durch ein Verändern der Winkel der ersten und der zweiten Längsachse des Querschnitts des ersten bzw. zweiten Abschnitts (20) mit großer Querschnittsfläche bezüglich der Ebene, in der die Mehrzahl von Resonatorlöchern (2a, 2b; 2a - 2i) angeordnet ist,
**dadurch gekennzeichnet, daß**
die erste Längsachse und die zweite Längsachse unter einem Winkel bezüglich zueinander angeordnet sind, und
die Richtung einer Schräglage der ersten Längsachse sich von der Richtung einer Schräglage der zweiten Längsachse unterscheidet.

4. Ein Verfahren gemäß Anspruch 3, das ferner folgende Schritte aufweist:
Bilden des Abschnitts (22) mit kleiner Querschnittsfläche mit einer Mittelachse, die von einer Mittelachse des Abschnitts (20) mit großer Querschnittsfläche derart verschoben ist, daß der Abschnitt (22) mit kleiner Querschnittfläche exzentrisch zu dem Abschnitt (20) mit großer Querschnittsfläche ist; und
Einstellen der Eigenkapazität (Cᵢ, Cⱼ) des zumindest einen Resonatorlochs (2a, 2b; 2a - 2i) und der gegenseitigen Kapazität (Cᵢⱼ) zwischen einem Paar benachbarter Resonatorlöcher (2a, 2b; 2a - 2i), die das zumindest eine Resonatorloch (2a, 2b; 2a - 2i) umfassen, durch ein Verändern des Betrags, um den die Mittelachse des Abschnitts (22) mit kleiner Querschnittsfläche von der Mittelachse des Abschnitts (20) mit großer Querschnittsfläche verschoben ist.

5. Ein dielektrischer Duplexer mit folgenden Merkmalen:
einem dielektrischen Filter gemäß Anspruch 1 oder 2;
einer Eingangs-/Ausgangselektrode (5b), einer Eingangselektrode (5c) bzw. einer Ausgangselektrode (5a), die auf der äußeren Oberfläche des dielektrischen Blocks (1) vorgesehen sind;
einer ersten Gruppe (2f - 2h) der Resonatorlöcher (2a - 2i), die zwischen der Eingangs-/Ausgangselektrode (5b) und der Eingangselektrode (5c) angeordnet sind, um ein Sendefilter zu definieren; und
einer zweiten Gruppe (2b - 2e) der Resonatorlöcher (2a - 2i), die zwischen der Eingangs-/Ausgangselektrode (5b) und der Ausgangselektrode (5a) angeordnet sind, um ein Empfangsfilter zu definieren.

6. Ein Verfahren zum Herstellen eines dielektrischen Duplexers, mit folgenden Schritten:
Bilden eines dielektrischen Filters gemäß Anspruch 3 oder 4;
Bilden einer Eingangs-/Ausgangselektrode (5b), einer Eingangselektrode (5c) und einer Ausgangselektrode (5a) auf der äußeren Oberfläche des dielektrischen Blocks (1);
Anordnen einer ersten Gruppe (2f - 2h) der Resonatorlöcher (2a - 2i), die zwischen der Eingangs-/Ausgangselektrode (5b) und der Eingangselektrode (5c) angeordnet sind, um ein Sendefilter zu definieren; und
Anordnen einer zweiten Gruppe (2b - 2e) der Resonatorlöcher (2a - 2i), die zwischen der Eingangs-/Ausgangselektrode (5b) und der Ausgangselektrode (5a) angeordnet sind, um ein Empfangsfilter zu definieren.

7. Ein Funk-Sende-/Empfangsgerät, das einen elektrischen Duplexer (RX, TX) gemäß Anspruch 5 umfaßt, wobei das Funk-Sende-/Empfangsgerät ferner folgende Merkmale aufweist:
eine Sendeschaltung zum Erzeugen eines Sendesignals, die mit der Eingangselektrode (5c) verbunden ist;
eine Empfangsschaltung zum Empfangen eines Empfangssignals, die mit der Ausgangselektrode (5a) verbunden ist; und
einen Antennenanschluß, der mit der Eingangs-/Ausgangselektrode (5b) verbunden ist.

8. Ein Funk-Sende-/Empfangsgerät gemäß Anspruch 7, das ferner eine Antenne (ANT) aufweist, die mit der Eingangs-/Ausgangselektrode (5b) über den Antennenanschluß verbunden ist.

## Revendications

1. Filtre diélectrique, comprenant :
un bloc diélectrique (1) possédant deux extrémités (1a, 1b) opposées l'une à l'autre ;
un conducteur extérieur (4) disposé sur une surface extérieure dudit bloc électrique ;
une pluralité de trous résonnants (2a, 2b ; 2a-2i) s'étendant entre lesdites deux extrémités (1a, 1b) dudit bloc diélectrique (1), chaque trou (2a, 2b ; 2a-2i) ayant une surface interne respective sur laquelle est disposé un conducteur interne (3 ; 3a-3i), chaque conducteur interne (3) étant connecté audit conducteur extérieur (4) à une extrémité (1b) pour former une extrémité en court-circuit du trou correspondant (2a, 2b ; 2a-2i), et étant isolé dudit conducteur extérieur (4) à l'autre extrémité (1a) pour former une extrémité à circuit ouvert du trou correspondant (2a, 2b ; 2a-2i) ;
un premier desdits trous résonnants comprenant une première partie superficielle de section importante (20) et une première partie superficielle de faible section (22) disposées de sorte que ledit premier trou (2a, 2b ; 2a-2i) possède des diamètres internes respectifs différents à ladite extrémité à circuit ouvert et à ladite extrémité en court-circuit ;
la forme en coupe de ladite première partie superficielle de grande surface (20) étant une forme allongée ayant un premier axe longitudinal, ledit premier axe longitudinal étant incliné par rapport à un plan dans lequel sont disposés ladite pluralité de trous résonnants (2a, 2b ; 2a-2i) ;
un second desdits trous résonnants comprenant une seconde partie superficielle de grande section (20) et une seconde partie superficielle de faible section (22) disposées de sorte que ledit second trou (2a, 2b ; 2a-2i) possède des diamètres internes respectifs différents à ladite extrémité à circuit ouvert et à ladite extrémité en court-circuit ; et
la forme en coupe de ladite seconde partie superficielle de grande section (20) étant une forme allongée ayant un second axe longitudinal, ledit second axe longitudinal étant incliné par rapport audit plan,
**caractérisé en ce que**
le premier axe longitudinal et le second axe longitudinal sont disposés angulairement l'un par rapport à l'autre, et
la direction d'inclinaison du premier axe longitudinal est différente de la direction d'inclinaison du second axe longitudinal.

2. Filtre diélectrique selon la revendication 1, dans lequel ladite partie superficielle de faible section (22) possède un axe central qui est décalé d'un axe central de ladite partie superficielle de grande section (20) de telle sorte que ladite partie superficielle de faible section (22) soit excentrée par rapport à ladite partie superficielle de grande section (20).

3. Procédé de fabrication d'un filtre diélectrique comprenant les étapes consistant à :
former un bloc diélectrique (1) ayant deux extrémités (1a, 1b) opposées l'une à l'autre ;
former un conducteur extérieur (4) sur une surface extérieure dudit bloc diélectrique (1) ;
former une pluralité de trous résonnants (2a, 2b; 2a-2i) s'étendant entre lesdites deux extrémités (1a, 1b) dudit bloc diélectrique (1), chaque trou (2a, 2b ; 2a-2i) ayant une surface interne respective ;
former un conducteur interne respectif (3 ; 3a-3i) sur chacune desdites surfaces internes, chaque conducteur interne (3 ; 3a-3i) étant connecté audit conducteur extérieur (4) à une extrémité (1b) pour former une extrémité en court-circuit du trou correspondant (2a, 2b; 2a-2i), et étant isolé (6) dudit conducteur extérieur (4) à l'autre extrémité (1a) pour former une extrémité à circuit ouvert du trou correspondant (2a, 2b ; 2a-2i) ;
former un premier desdits trous résonnants (2a, 2b; 2a-2i) avec une première partie superficielle de grande section (2) et une première partie superficielle de faible section (22) disposées de sorte que ledit premier trou (2a, 2b ; 2a-2i) présente des diamètres internes respectifs différents à ladite extrémité à circuit ouvert et à ladite extrémité en court-circuit ;
la forme en coupe de ladite première partie superficielle de grande section (20) étant une forme allongée qui définit un premier axe longitudinal, ledit premier axe longitudinal étant incliné par rapport à un plan dans lequel se trouvent ladite pluralité de trous résonnants (2a, 2b ; 2a-2i) ;
former un second desdits trous résonnants (2a, 2b; 2a-2i) avec une seconde partie superficielle de grande section (20) et une seconde partie superficielle de faible section (22) disposées de sorte que ledit second trou (2a, 2b ; 2a-2i) possède des diamètres internes respectifs différents à ladite extrémité à circuit ouvert et à ladite extrémité en court-circuit ;
la forme en coupe de ladite seconde partie superficielle de grande section (20) étant une forme allongée qui définit un second axe longitudinal, ledit second axe longitudinal faisant un angle par rapport audit plan ; et
ajuster la capacité répartie (Cᵢ, Cⱼ) dudit au moins un trou résonnant (2a, 2b ; 2a-2i) et la capacité mutuelle (Cᵢⱼ) entre une paire desdits trous résonnants adjacents (2a, 2b ; 2a-2i) comprenant ledit au moins un trou résonnant (2a, 2b ; 2a-2i) en modifiant les angles des premier et second axes longitudinaux de la section transversale des première et seconde parties superficielles de grande section (20), respectivement, par rapport audit plan dans lequel se trouve ladite pluralité de trous résonnants (2a, 2b ; 2a-2i),
**caractérisé en ce que**
le premier axe longitudinal et le second axe longitudinal sont disposés angulairement l'un par rapport à l'autre, et
la direction d'inclinaison du premier axe longitudinal est différente de la direction d'inclinaison du second axe longitudinal.

4. Procédé selon la revendication 3, comprenant en outre les étapes consistant à :
former ladite partie superficielle de faible section (22) avec un axe central qui est décalé d'un axe central de ladite partie superficielle de grande section (20) de telle sorte que ladite partie superficielle de faible section (22) soit excentrée par rapport à ladite partie superficielle de grande section (20) ; et
régler la capacité répartie (Cᵢ, Cⱼ) dudit au moins un trou résonnant (2a, 2b ; 2a-2i) et la capacité mutuelle (Cᵢⱼ) entre une paire desdits trous résonnants adjacents (2a, 2b ; 2a-2i) comprenant ledit au moins un trou résonnant (2a, 2b ; 2a-2i) en modifiant le montant dont l'axe central de ladite partie superficielle de faible section (22) est décalé de l'axe central de ladite partie superficielle à grande section (20).

5. Duplexeur diélectrique comprenant :
un filtre diélectrique selon la revendication 1 ou 2 ;
une électrode d'entrée/sortie (5b), une électrode d'entrée (5c), et une électrode de sortie (5a) respectivement disposées sur la surface extérieure dudit bloc diélectrique (1) ;
un premier groupe (2f-2h) desdits trous résonnants (2a-2i) disposé entre ladite électrode d'entrée/sortie (5b) et ladite électrode d'entrée (5c) pour définir un filtre de transmission ; et
un second groupe (2b-2e) desdits trous résonnants (2a-2i) disposés entre ladite électrode d'entrée/sortie (5b) et ladite électrode de sortie (5a) pour définir un filtre de réception.

6. Procédé de fabrication d'un duplexeur diélectrique comprenant les étapes consistant à :
former un filtre diélectrique selon la revendication 3 ou 4 ;
former une électrode d'entrée/sortie (5b), une électrode d'entrée (5c), et une électrode de sortie (5a) sur la surface extérieure dudit bloc diélectrique (1) ;
disposer un premier groupe (2f-2h) desdits trous résonnants (2a-2i) disposés entre ladite électrode d'entrée/sortie (5b) et ladite électrode d'entrée (5c) pour définir un filtre de transmission ; et
disposer un second groupe (2b-2e) desdits trous résonnants (2a-2i) disposés entre ladite électrode d'entrée/sortie (5b) et ladite électrode de sortie (5a) pour définir un filtre de réception.

7. Emetteur-récepteur radio comprenant un duplexeur diélectrique (RX, TX) selon la revendication 5, ledit émetteur-récepteur radio comprenant en outre :
un circuit d'émission pour générer un signal d'émission et étant relié à ladite électrode d'entrée (5c) ;
un circuit de réception pour recevoir un signal de réception et étant relié à ladite électrode de sortie (5a) ; et
une borne d'antenne reliée à ladite électrode d'entrée/sortie (5b).

8. Emetteur-récepteur radio selon la revendication 7, comprenant en outre une antenne (ANT) reliée à ladite électrode d'entrée/sortie (5b) par l'intermédiaire de ladite borne d'antenne.
